# DEMANDE DE BREVET EUROPEEN

(11) **EP 0 732 857 A1**
(43) Date de publication de la demande: **18.09.1996**
(21) Numéro de dépôt: 96410022.6
(22) Date de dépôt: 12.03.1996
(51) Int. Cl.: H04N 7/50

(54) **Décodeur MPEG à capacité mémoire réduite**

(30) Priorité: 14.03.1995 FR 9503163
(71) Demandeur: SGS-THOMSON MICROELECTRONICS SA, F-94250 Gentilly (FR)
(72) Inventeur: Artieri, Alain, 38240 Meylan (FR)
(74) Mandataire: de Beaumont, Michel

(57) **Abrégé**

La présente invention concerne le décodage d'une image pouvant être d'un type bidirectionnel (B1) nécessitant des données de deux images précédemment décodées (P0, P3), chaque image étant affichée en deux trames successives correspondant à des lignes de parités différentes. Selon l'invention, chaque image bidirectionnelle (B) est décodée deux fois pendant le temps d'affichage de l'image, une première fois tandis qu'une première trame de l'image est directement affichée, et une deuxième fois tandis que la deuxième trame est directement affichée.

## Description

La présente invention concerne le décodage d'images comprimées notamment selon les normes MPEG. Elle concerne plus particulièrement l'échange de données entre un circuit de traitement d'image et une mémoire dynamique.

Selon diverses normes de compression d'image, notamment MPEG, les images sont traitées par carrés, généralement de 16x16 pixels. A chaque carré correspond ce que l'on appelle un macrobloc. Les macroblocs peuvent être de divers formats. Le format le plus couramment utilisé est celui dit 4:2:0 selon lequel chaque macrobloc contient quatre blocs de 8x8 pixels de luminanoe de 8 bits et 2 blocs de 8x8 pixels de chrominance de 8 bits.

Les images traitées sont essentiellement de trois types, à savoir, "intra", prédit et bidirectionnel. Les macroblocs d'une image "intra" ne subissent pas de compensation de mouvement. Dans une image prédite, chaque macrobloc peut subir une compensation de mouvement qui consiste à combiner le macrobloc avec un autre macrobloc, dit prédicteur, cherché dans une image précédemment décodée. Chaque macrobloc d'une image bidirectionnelle peut subir une compensation de mouvement qui consiste à combiner le macrobloc avec deux autres macroblocs prédicteurs cherchés respectivement dans deux images précédemment décodées. Les positions des macroblocs prédicteurs sont déterminées par des vecteurs de mouvement.

Il apparaît clairement qu'un décodeur MPEG doit stocker au moins deux images précédemment décodées afin de pouvoir traiter une image bidirectionnelle. En réalité, il stocke aussi l'image en cours de décodage afin de pouvoir réorganiser les pixels de manière appropriée avant de les afficher. En effet, les pixels sont décodés bloc par bloc alors qu'il faut les afficher ligne par ligne (d'abord une trame de lignes impaires puis une trame de lignes paires).

La figure 1 représente très schématiquement un décodeur MPEG décrit dans la demande de brevet européen 0 626 653. Ce décodeur comprend une mémoire dynamique (DRAM) accessible par un bus de 64 bits B64. Un circuit pipe-line 12 reçoit des données comprimées par le bus B64 et fournit les blocs de luminance et de chrominance des macroblocs traités à un additionneur 14. Par ailleurs, l'additionneur 14 reçoit des blocs correspondants de macroblocs prédicteurs qui sont fournis à un circuit de prédiction 16 par le bus B64. Le circuit pipe-line 12 effectue généralement un décodage à longueur variable (VLD), un décodage de chaînes de zéros (RLD), une conversion de balayage zig-zag en balayage linéaire, et une transformée cosinus discrète inverse (DCT). Selon les normes MPEG, le circuit de prédiction 16 comprend essentiellement ce que l'on appelle un filtre "demi-pixel" destiné, si un vecteur de mouvement permettant de chercher un macrobloc prédicteur n'est pas entier, de décaler ce macrobloc prédicteur d'un demi-pixel verticalement et/ou horizontalement.

Les pixels décodés fournis par l'additionneur 14 sont stockés dans une mémoire tampon (FIFO) 18 avant leur transfert dans la mémoire 10 par le bus B64.

Un circuit d'affichage 20 reçoit des pixels à afficher de la mémoire 10 par l'intermédiaire d'une mémoire tampon 22.

Les échanges entre la mémoire 10 et les divers éléments du décodeur sont gérés par un contrôleur mémoire (MCU) 24.

La mémoire 10, comme on l'a précédemment indiqué, doit stocker deux images précédemment décodées afin de reconstruire une image bidirectionnelle. En outre, une image bidirectionnelle en cours de reconstruction doit également être stockée en mémoire afin d'envoyer ses pixels à l'affichage 20 dans un ordre adéquat. Ainsi, la mémoire 10 comprend au moins trois zones d'image IM1 à IM3. Chacune de ces zones IM1 à IM3 doit être capable de stocker une image PAL (la plus grande selon les normes internationales) de 720x576 pixels. En utilisant le format 4:2:0 des macroblocs, les pixels sont de 12 bits et la taille totale de l'image est de 4 976 640 bits.

En outre, les normes MPEG préconisent que la mémoire 10 comporte une zone de données comprimées CD d'au moins 2,6 Mbits dans laquelle sont écrites les données comprimées en attente de traitement, et une zone X servant à stocker des informations à afficher en surimpression sur l'image et des données de son, la capacité de cette zone X étant d'environ 1 Mbit. Ainsi, la capacité totale de la mémoire 10 doit être d'environ 18 Mbits.

Une telle mémoire est difficile à réaliser à l'aide de composants courants du marché. En effet, le composant de mémoire dynamique le plus courant, et donc le moins cher, a une capacité de 256 kilomots de 16 bits (256k x16). A l'aide de quatre tels composants, on réalise immédiatement une mémoire de 16 Mbits accessible par un bus de 64 bits. Par contre, il n'est pas avantageux de rajouter 2 mégabits accessibles par le même bus de 64 bits. Une solution immédiate consisterait à rajouter 4 Mbits en mettant en parallèle sur chaque composant 256k x16 un composant de 64 kilomots de 16 bits. Toutefois, les composants 64k x16 sont peu courants et de rapport prix-capacité particulièrement élevé.

Un objet de la présente invention est de prévoir un décodeur d'image qui puisse traiter les images des différents standards internationaux avec une capacité mémoire réduite.

Pour atteindre cet objet, la présente invention prévoit d'afficher chaque image bidirectionnelle au vol, c'est-à-dire d'afficher les pixels au fur et à mesure qu'ils sont décodés. Ceci permet d'économiser une zone d'image en mémoire, puisqu'il devient inutile de stocker l'image en cours de reconstruction. Il en résulte que la capacité de la mémoire est réduite en dessous de la limite de 16 mégabits immédiatement réalisable à l'aide des composants mémoire les plus courants.

Pour afficher une image bidirectionnelle au vol, il est en fait nécessaire de la décoder deux fois pendant le temps d'affichage. Un aspect de l'invention est de constater qu'un tel double décodage est possible sans qu'il soit nécessaire d'utiliser des composants mémoire rapides.

La présente invention prévoit plus particulièrement le décodage d'une image bidirectionnelle nécessitant des données de deux images précédemment décodées, chaque image étant affichée en deux trames successives correspondant à des lignes de parités différentes. Chaque image bidirectionnelle est décodée deux fois pendant le temps d'affichage de l'image, une première fois tandis qu'une première trame de l'image est directement affichée, et une deuxième fois tandis que la deuxième trame est directement affichée.

Généralement, chaque image est traitée par macroblocs correspondant à des carrés d'image, un macrobloc bidirectionnel pouvant être de type entrelacé nécessitant deux demi-macroblocs prédicteurs dans chacune des deux images précédemment décodées, les deux demi-macroblocs prédicteurs d'une même image précédemment décodée correspondant à des lignes de parités différentes. Selon un mode de réalisation de l'invention, pour traiter un macrobloc bidirectionnel entrelacé, seulement les deux demi-macroblocs prédicteurs correspondant aux lignes de la trame affichée sont utilisés à chacun des deux décodages.

Selon un mode de réalisation de la présente invention, on détecte que le nombre de macroblocs traités devient inférieur au nombre de macroblocs affichés pour utiliser un seul des deux macroblocs prédicteurs dans le traitement d'un macrobloc bidirectionnel.

Ces objets, caractéristiques et avantages ainsi que d'autres de la présente invention seront exposés en détail dans la description suivante de modes de réalisation particuliers, faite à titre non-limitatif à l'aide des figures jointes parmi lesquelles :
la figure 1, précédemment décrite, représente schématiquement un décodeur MPEG classique ;
la figure 2 représente une séquence de décodage et d'affichage de plusieurs images selon la présente invention ; et
la figure 3 représente un exemple de modification du décodeur de la figure 1 pour mettre en oeuvre la présente invention.

Selon l'invention, au lieu de stocker une image bidirectionnelle en cours de reconstruction dans une zone mémoire afin de l'afficher plus tard, cette image bidirectionnelle est affichée au vol, c'est-à-dire qu'elle est affichée tandis qu'elle est décodée. Ceci permet de supprimer la zone d'image en mémoire qui était nécessaire pour stocker l'image bidirectionnelle en attendant son affichage. Dans ce cas, la taille nécessaire de la mémoire 10 est diminuée de la taille d'une zone d'image, c'est-à-dire qu'elle passe, pour le standard PAL (le plus contraignant), de 18 Mbits à 14 Mbits. Cette valeur est en dessous de la limite de 16 Mbits qui est obtenue immédiatement en utilisant quatre composants mémoire standards de 256 kilomots de 16 bits. En outre, le solde de 2 Mbits peut être utilisé avantageusement pour stocker davantage d'informations à afficher en surimpression ou comme mémoire périphérique d'un microprocesseur associé au décodeur.

Un problème que l'on rencontre si l'on veut afficher au vol une image en cours de décodage est qu'il faut afficher d'abord une première trame constituée des lignes impaires de l'image, puis une deuxième trame constituée des lignes paires de l'image, alors que le traitement précédant l'affichage est généralement effectué sur l'image globale, c'est-à-dire dans l'ordre des lignes. Ceci entraîne, si le décodeur décode les lignes au rythme d'affichage de celles-ci, que la (2k-1)ième ligne doit être affichée au moment où le décodeur décode la k-ième ligne. En d'autres termes, au moment où la première trame aurait dû être affichée, le décodeur n'aura pu décoder que la moitié de cette trame.

Pour résoudre ce problème, la présente invention prévoit de décoder chaque image bidirectionnelle deux fois pendant la durée d'affichage de cette image. Dans ce cas, au moment où l'on doit afficher la (2k-1)ième ligne, on aura décodé 2k lignes. En d'autres termes, au moment où l'on aura affiché la première trame, on aura décodé l'image complète, et donc les deux trames de cette image. Comme l'affichage s'effectue au vol, la deuxième trame qui a été décodée mais non affichée est perdue. Cette deuxième trame est affichée en même temps que l'on décode une deuxième fois l'image.

Un aspect important de l'invention est de constater que le fait de décoder deux fois plus vite une image bidirectionnelle n'est pas contraignant au point de nécessiter des débits deux fois supérieurs d'échange de données avec la mémoire, et donc de nécessiter une mémoire deux fois plus rapide qui serait difficile à trouver dans le commerce et en tout cas de prix prohibitif. En effet, comme le montre l'analyse ci-après, le doublage de la vitesse de décodage des images bidirectionnelles entraîne une augmentation du débit des échanges avec la mémoire de seulement environ 25 %, ce qui permet toujours d'utiliser des composants mémoire standard et peu coûteux.

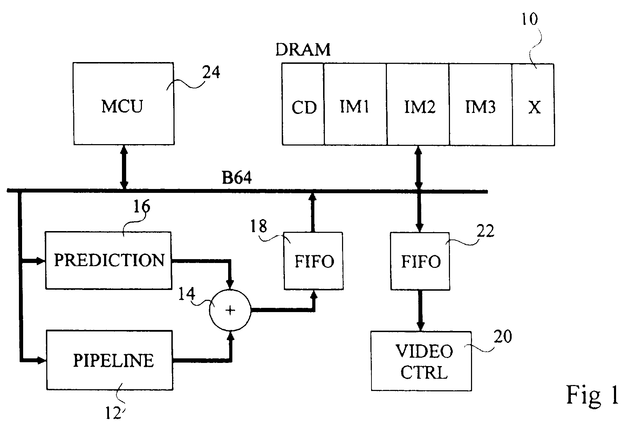

L'analyse ci-après est basée, à titre d'exemple, sur le décodeur décrit dans la demande de brevet européen 0 626 653 (figure 1). Les données sont échangées avec la mémoire 10 par un bus de 64 bits.

Pendant le temps d'affichage d'une image, le décodeur classique de la figure 1 doit effectuer plusieurs opérations concourantes. Ces opérations sont indiquées dans le tableau ci-dessous. Ce tableau indique en outre les coûts correspondants en cycles d'accès mémoire des différentes opérations.

Les coûts en cycles sont calculés sur le temps d'affichage d'une image qui peut avoir, sous forme comprimée, une taille maximale de 1,75 Mbits spécifiée par les normes MPEG. La situation pire cas est celle d'une image NTSC de 1,75 Mbits, puisque les images NTSC, plus petites (720x480 pixels) que celles des autres standards, sont affichées en un temps plus court. Ce temps d'affichage est de 33,37 millisecondes.

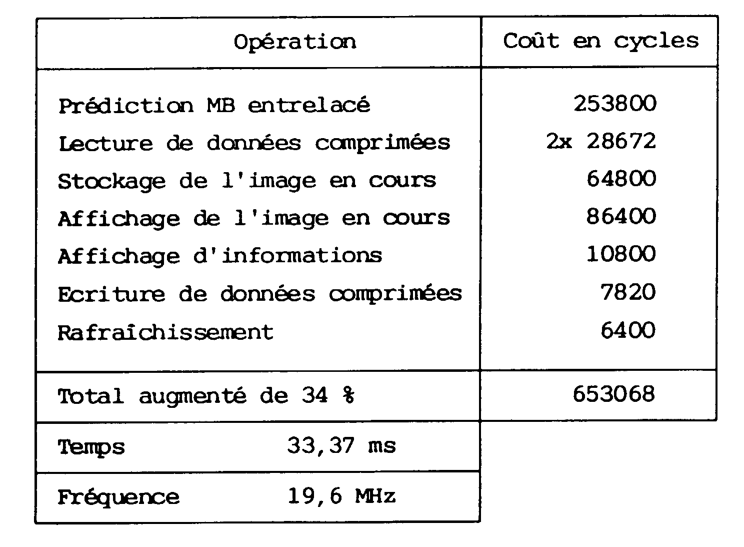

L'opération la plus coûteuse est la fourniture de macroblocs prédicteurs au circuit de prédiction 16 lorsque, dans le pire cas, chacun des macroblocs de l'image à traiter est de type bidirectionnel entrelacé. Dans ce cas particulier, il faut fournir quatre demi-macroblocs prédicteurs au circuit de prédiction 16 pour chaque macrobloc traité. Deux demi-macroblocs prédicteurs, cherchés dans une image précédemment décodée, correspondent respectivement à des lignes impaires et paires.

Un macrobloc prédicteur complet comporte une matrice de luminance de 17x17 pixels de 8 bits et une matrice de chrominance de 9x18 pixels de 8 bits, c'est-à-dire que les matrices de luminance et de chrominance d'un macrobloc prédicteur comportent respectivement une colonne et une rangée de pixels de plus et une colonne et deux rangées de pixels de plus que les matrices correspondantes d'un macrobloc normal, ceci pour les besoins de filtrage demi-pixel dans le circuit de prédiction 16.

En outre, le premier pixel d'un macrobloc prédicteur peut coïncider avec un pixel quelconque d'un macrobloc d'une image précédemment décodée. Ceci veut dire que ce premier pixel du macrobloc prédicteur n'est pas au début d'un mot de 64 bits stocké dans la mémoire 10. En fait, chaque rangée de la matrice de luminance du macrobloc prédicteur est à cheval sur trois mots de 64 bits, et chaque rangée de la matrice de chrominance est à cheval sur deux mots de 64 bits. Ainsi, pour accéder à un macrobloc prédicteur, on accède à un bloc de 17 pixels de haut et de 24 pixels de large (correspondant à trois mots de 64 bits) pour récupérer la matrice de luminance de 17x17 pixels, et on accède à un bloc de 18 pixels de haut et de 16 pixels de large (correspondant à deux mots de 64 bits) pour récupérer la matrice de chrominance de 9x18 pixels. En résumé, pour récupérer un macrobloc prédicteur, on doit accéder à 87 mots de 64 bits, ce qui représente un coût de 87 cycles.

Dans le cas où il faut accéder séparément à deux demi-macroblocs prédicteurs, chaque demi-matrice de luminance correspondante a une hauteur de 9 pixels (la demi-matrice effective de 8 rangées plus une rangée supplémentaire pour effectuer le filtrage demi-pixel). En outre, chaque demi-matrice de chrominance a une hauteur de 10 pixels. En effet, la demi-matrice de chrominance comporte, pour chacune de deux composantes (U et V), quatre rangées effectives plus une rangée supplémentaire pour le filtrage demi-pixel. Le coût qui en résulte pour accéder à deux demi-macroblocs prédicteurs est de 94 cycles. Le coût indiqué dans le tableau ci-dessus correspond au nombre 94 multiplié par 2 (traitement bidirectionnel) et par 1350 (le nombre de macroblocs à traiter dans l'image).

Une autre opération consiste à lire les données comprimées de l'image en cours de décodage. Comme on l'a précédemment indiqué, dans le pire cas, le nombre de données comprimées correspondant à une image est de 1,75 Mbits qui sont lus en 28672 cycles. En outre, il faut lire les données comprimées de l'image suivante pour y retrouver un en-tête, ce qui correspond à 28672 cycles supplémentaires dans le pire cas.

Le stockage de l'image décodée (1350 macroblocs) coûte 68400 cycles, et sa relecture dans le but de l'afficher coûte 86400 cycles (il faut plus de cycles pour l'affichage que pour le stockage, car les données de chrominance sont lues deux fois à l'affichage).

En même temps que l'on affiche une image, on peut également avoir des informations à afficher en surimpression (OSD). Ces informations sont composées de pixels de deux bits. Pour afficher les informations correspondant à l'image, il faut 10800 cycles.

Tandis que l'on affiche une image, il faut aussi assurer la réception en continu de données comprimées. Ces données comprimées arrivent à un débit maximal de 15 10⁶ bits/s et doivent être écrites dans la mémoire 10. Le nombre correspondant de cycles d'accès est de 7820.

La mémoire 10 doit finalement être rafraîchie toutes les 8 millisecondes. La mémoire est rafraîchie par pages en trois cycles par page. Un composant 256k x16 comporte 512 pages, et il faut 6400 cycles de rafraîchissement en 33,37 ms.

Le total des cycles du tableau est augmenté d'environ 34 % pour tenir compte de cycles nécessaires de changement de page. La lecture des demi-macroblocs prédicteurs et l'affichage, qui s'effectue ligne par ligne alors que les images sont stockées par macroblocs, nécessitent un nombre particulièrement élevé de changements de page. Il en résulte qu'il faut effectuer 653068 cycles en 33,37 ms, ce qui correspond à une fréquence de fonctionnement de 19,6 mégahertz ou encore à un temps d'accès de 51 nanosecondes. Des mémoires standard qui peuvent fonctionner à cette vitesse sont celles de type "-80".

Selon l'invention, pour un affichage au vol d'images bidirectionnelles, les coûts en cycles doivent être calculés sur le temps d'affichage d'une rangée de macroblocs et non sur une image. En effet, les normes MPEG précisent que, pour chaque image, le nombre de bits correspondant à une rangée de macroblocs comprimés peut atteindre une valeur maximale égale au nombre de bits d'une rangée non-comprimée plus un macrobloc. Cette situation doit être traitée en temps réel. Ceci est plus contraignant que la situation pire cas classique d'une image comprimée de taille maximale de 1,75 Mbits. Une image bidirectionnelle était classiquement affichée en différé, ce qui permettait d'absorber des retards de traitement localisés, par exemple d'une rangée de macroblocs pire cas.

La valeur minimale de la durée d'affichage d'une rangée de macroblocs est de 1,02 millisecondes pour le standard NTSC. Ainsi, pour traiter deux fois chaque image NTSC, un décodeur selon l'invention doit être capable de traiter en 0,51 milliseconde une rangée de macroblocs pire cas, c'est-à-dire 45 macroblocs correspondant à une largeur d'image de 720 pixels. Le tableau ci-dessous indique les opérations à effectuer selon l'invention ainsi que les coûts en cycles d'accès.

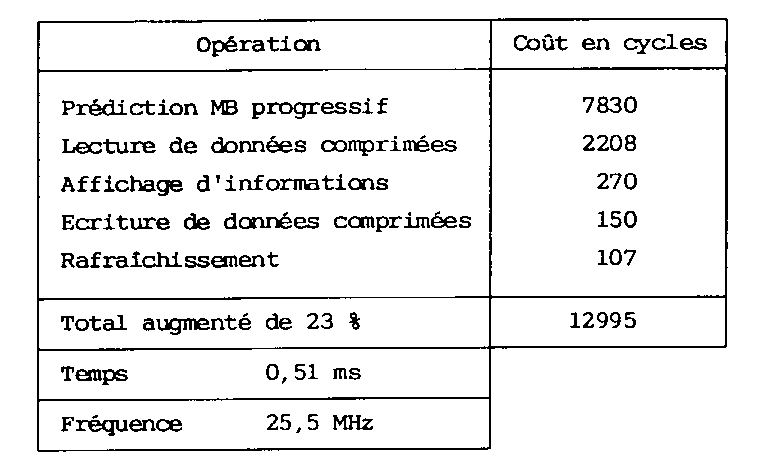

Dans ce tableau, on s'aperçoit que l'on n'a plus les cycles de stockage de l'image en cours de décodage et de son affichage. En effet, les pixels décodés sont aussitôt affichés, et il devient inutile que ceux-ci transitent par la mémoire 10.

Le pire cas de prédiction n'est pas celui des macroblocs bidirectionnels entrelacés mais celui des macroblocs bidirectionnels progressifs (c'est-à-dire dont les macroblocs prédicteurs sont complets), qui ne coûte plus que 87 cycles par macrobloc ou 7830 cycles sur une rangée. En effet, lors du premier décodage, on n'affiche que la première trame, correspondant aux lignes impaires ; il est inutile, pour reconstruire un macrobloc entrelacé, d'utiliser les demi-macroblocs correspondant à des lignes paires. Similairement, lors du deuxième décodage, on n'affiche que la deuxième trame, correspondant aux lignes paires ; il est inutile pour reconstruire le macrobloc entrelacé d'utiliser les demi-macroblocs correspondant aux lignes impaires. Ainsi, on économise les lectures de deux demi-macroblocs pour une prédiction entrelacée.

Les données comprimées à lire correspondent au nombre de bits de 46 (45+1) macroblocs non-comprimés. Il faut pour cela 2208 cycles.

Les coûts d'affichage d'informations, d'écriture de données comprimées et de rafraîchissement, ramenés à 0,51 ms, sont la moitié de ceux du tableau précédent, puisque les coûts de ces opérations sont proportionnels au temps qui est ici la moitié du temps de décodage normal.

La recherche d'en-tête d'image n'apparaît pas dans le tableau, car elle peut être effectuée en dehors des périodes d'affichage, comme par exemple lors des retours de trame qui laissent suffisamment de temps pour cela, même dans les situations pire cas.

Le coût total de ce décodage à vitesse double est augmenté de 23 % pour tenir compte de changements de page nécessaires. La marge de 23 % est inférieure à celle de la situation classique (34 %), car les accès mémoire effectués sont plus réguliers, notamment pour chercher deux macroblocs prédicteurs complets au lieu de quatre demi-macroblocs prédicteurs, ce qui diminue le nombre de changements de page. Il en résulte un coût de 12995 cycles, ce qui correspond, sur 0,51 ms, à une fréquence de fonctionnement de 25,5 MHz, ou encore à un temps d'accès de 39 nanosecondes. Des mémoires standard qui peuvent fonctionner à cette vitesse sont celles de type "-60", qui sont à peine plus coûteuses, voire aussi coûteuses, que des mémoires de type "-80".

Bien entendu, les vitesses de fonctionnement des circuits de traitement doivent être adaptées au double décodage des images bidirectionnelles. Pour cela, il suffit de cadencer le contrôleur mémoire 24 à 25,5 MHz. Le circuit pipeline 12, qui traite un pixel par cycle, doit être cadencé à 34 mégahertz, ce qui correspond aux 17280 pixels qui doivent être traités pendant 0,51 milliseconde. Des circuits fonctionnant à ces vitesses sont tout à fait réalisables dans les technologies habituelles. C'est en fait essentiellement la mémoire 10 qui limite la vitesse de fonctionnement.

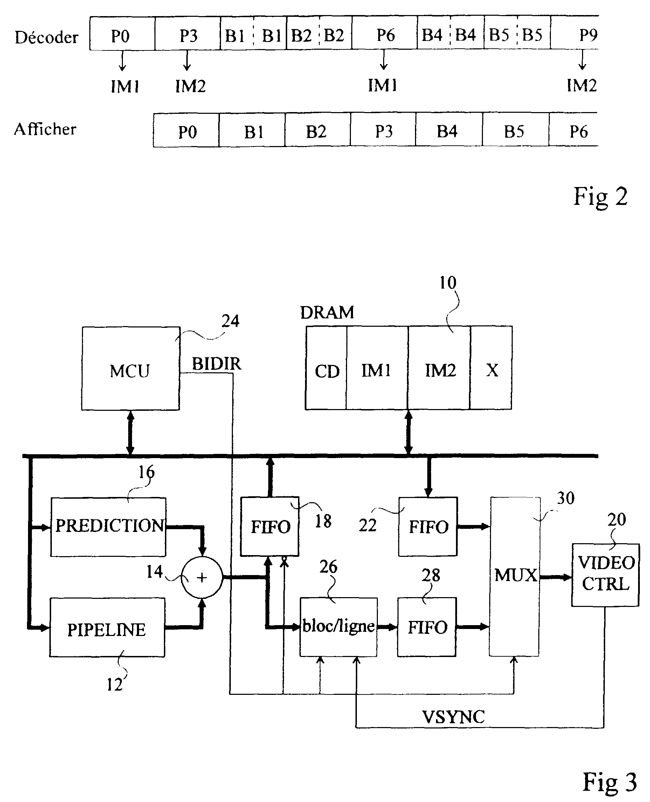

La figure 2 représente un diagramme temporel du décodage et de l'affichage d'une série d'images selon la présente invention. Des images à afficher successivement sont désignées par P0, B1, B2, P3, B4, B5, P6, où la lettre P indique une image prédite et la lettre B une image bidirectionnelle. Une telle succession d'images est classique selon les normes MPEG.

La reconstruction de chaque image prédite P nécessite des macroblocs prédicteurs cherchés dans l'image prédite (ou intra, non représentée) qui lui précède. La reconstruction de chaque image bidirectionnelle B nécessite des macroblocs prédicteurs cherchés dans les images prédites qui l'encadrent. Ainsi, les données comprimées correspondant aux images arrivent au décodeur dans un ordre différent de celui de l'affichage. Ici, ces données comprimées arrivent selon l'ordre P0, P3, B1, B2, P6, B4, B5.

Initialement, l'image P0 est décodée et stockée en mémoire, par exemple dans une zone IM1. Pendant que l'image P3 est décodée et stockée dans une zone IM2, on affiche l'image P0. Ensuite, l'image B1 est décodée une première fois à vitesse double tandis que l'on affiche au vol la première trame de l'image B1, puis on décode une deuxième fois l'image B1 à vitesse double tandis que l'on affiche la deuxième trame de l'image B1. Chaque décodage de l'image B1 utilise des macroblocs prédicteurs cherchés dans les images P0 et P3, qui sont stockées dans les zones IM1 et IM2. Les mêmes opérations se produisent pour l'image bidirectionnelle B2. Ensuite, l'image P6 est décodée et stockée dans la zone IM1 à la place de l'image P0, tandis que l'on affiche l'image P3. Les images B4 et B5 sont, comme les images B1 et B2, décodées deux fois à vitesse double tandis qu'on les affiche. Les décodages des images B4 et B5 utilisent des macroblocs prédicteurs cherchés dans les images P3 et P6 qui sont stockées dans les zones IM2 et IM1, etc.

La figure 3 représente un exemple de modification du décodeur de la figure 1 pour réaliser le double décodage des images bidirectionnnelles selon l'invention. Des mêmes éléments qu'à la figure 1 sont désignés par des mêmes références. La mémoire 10 ne contient plus la troisième zone d'image IM3. La sortie de l'additionneur 14, reliée à la mémoire tampon 18, est en outre reliée à un convertisseur 26 de balayage par blocs en balayage par lignes. En effet, l'additionneur 14 fournit des blocs de 8x8 pixels correspondant à chacun des blocs de 8x8 pixels des macroblocs traités tandis que le circuit d'affichage 20 doit recevoir les pixels ligne par ligne. La capacité de ce convertisseur de balayage 26 est de huit lignes, malgré le fait que les macroblocs correspondent à 16 lignes. En effet, à chaque décodage, on n'affiche qu'une trame, c'est-à-dire seulement les lignes paires ou seulement les lignes impaires. Ainsi, le convertisseur de balayage 26 trie, parmi les lignes des blocs qu'il reçoit, celles dont la parité correspond à celle de la trame à afficher. Cette sélection de parité est par exemple déterminée par un signal de synchronisation de trame VSYNC fourni par le circuit d'affichage 20. Le convertisseur de balayage 26 est de préférenoe du type décrit dans le brevet américain 5 151 976 pour limiter sa taille.

La sortie du convertisseur 26 est fournie à une mémoire tampon 28. Un multiplexeur fournit au circuit d'affichage 20 l'une ou l'autre des sorties de la mémoire tampon 28 et de la mémoire tampon 22 qui reçoit de la mémoire 10 des images non-bidirectionnelles à afficher. Un signal de sélection BIDIR commute le multiplexeur 30 et valide l'un ou l'autre du convertisseur de balayage 26 ou de la mémoire tampon 18 selon que l'additionneur 14 fournit ou non une image bidirectionnelle. Ce signal BIDIR est activé, par exemple, par le contrôleur mémoire 24 lorsqu'il commence le transfert de données comprimées d'une image bidirectionnelle au circuit pipeline 12.

Le contrôleur mémoire 24 est reprogrammé pour effectuer deux fois la tâche de transfert au circuit pipeline 12 des données comprimées correspondant à chaque image bidirectionnelle.

Une rangée pire cas de macroblocs a une très faible probabilité de survenir. Ainsi, il est la plupart du temps inutile d'effectuer des accès mémoire à une vitesse aussi élevée que 25,5 MHz, nécessitant des mémoires "-60". Selon un mode de réalisation, la vitesse des accès mémoire est adaptée au traitement d'une image pire cas au lieu d'une rangée de macroblocs pire cas, ce qui réduit la vitesse des accès mémoire à 22,8 MHz dans les exemples susmentionnés. On peut alors utiliser des mémoires "-70".

Pour toutefois traiter le cas très peu probable d'une rangée de macroblocs pire cas, on prévoit de détecter le retard du décodage qui surviendrait alors et de forcer le décodeur à fonctionner en mode "prédit" au lieu de "bidirectionnel", pour n'utiliser qu'un seul des deux macroblocs prédicteurs. Bien entendu, il en résulterait une légère altération des pixels décodés, mais cette altération serait imperceptible, car elle se produirait au plus sur la durée d'affichage de la rangée de macroblocs (1,02 ms).

Le retard du décodage est détecté, par exemple, en détectant que le nombre de macroblocs décodés devient inférieur au nombre de macroblocs affichés, ces deux nombres étant classiquement disponibles dans le décodeur.

## Revendications

1. Décodeur d'image comprenant :
- une mémoire (10) stockant au moins deux images précédemment décodées (IM1, IM2) ;
- un circuit (12, 14, 16, 24) de traitement d'une image courante pouvant être d'un type bidirectionnel récessitant des données de deux images précédemment décodées ;
- un affichage (20) recevant chaque image en deux trames successives correspondant à des lignes de première et deuxième parités, respectivement ;
caractérisé en ce que le circuit de traitement est prévu pour traiter chaque image bidirectionnelle deux fois pendant le temps d'affichage de l'image, une première fois tandis qu'il fournit directement une première trame de l'image à l'affichage, et une deuxième fois tandis qu'il fournit directement la deuxième trame à l'affichage.

2. Décodeur selon la revendication 1, dans lequel le circuit de traitement est prévu pour traiter chaque image par blocs regroupés en macroblocs correspondant à des carrés d'image, caractérisé en ce qu'il comprend un circuit de réorganisation (26) pour recevoir les trames de l'image bidirectionnelle par demi-blocs correspondant à des lignes de même parité, et fournir les lignes de même parité correspondantes à l'affichage.

3. Décodeur selon la revendication 1, dans lequel un macrobloc bidirectionnel peut être de type entrelacé nécessitant deux demi-macroblocs prédicteurs dans chacune des deux images précédemment décodées, les deux demi-macroblocs prédicteurs d'une même image précédemment décodée correspondant à des lignes de parités différentes, caractérisé en ce que, pour traiter un macrobloc bidirectionnel entrelacé, le circuit de traitement est prévu pour utiliser, à chacun des deux décodages, seulement les deux demi-macroblocs prédicteurs correspondant aux lignes de la trame fournie à l'affichage.

4. Procédé de décodage d'une image pouvant être d'un type bidirectionnel nécessitant des données de deux images précédemment décodées, chaque image étant affichée en deux trames successives correspondant à des lignes de parités différentes ; caractérisé en ce que chaque image bidirectionnelle est décodée deux fois pendant le temps d'affichage de l'image, une première fois tandis qu'une première trame de l'image est directement affichée, et une deuxième fois tandis que la deuxième trame est directement affichée.

5. Procédé de décodage selon la revendication 4, dans lequel chaque image est traitée par macroblocs correspondant à des carrés d'image, un macrobloc bidirectionnel pouvant être de type entrelacé nécessitant deux demi-macroblocs prédicteurs dans chacune des deux images précédemment décodées, les deux demi-macroblocs prédicteurs d'une même image précédemment décodée correspondant à des lignes de parités différentes, caractérisé en ce que, pour traiter un macrobloc bidirectionnel entrelacé, seulement les deux demi-macroblocs prédicteurs correspondant aux lignes de la trame affichée sont utilisés à chacun des deux décodages.

6. Procédé de décodage selon la revendication 4, caractérisé en ce qu'il comprend l'étape consistant à détecter que le nombre de macroblocs traités devient inférieur au nombre de macroblocs affichés pour utiliser un seul des deux macroblocs prédicteurs dans le traitement d'un macrobloc bidirectionnel.
